# EUROPEAN PATENT APPLICATION

(11) **EP 4 628 967 A1**
(43) Date of publication of application: **08.10.2025**
(21) Application number: 22967928.7
(22) Date of filing: 07.12.2022
(51) Int. Cl.: G02B 27/01, G02C 5/02, G02C 5/14

(54) **ELECTRONIC DEVICE**

(71) Applicant: LG Electronics Inc., Yeongdeungpo-gu Seoul 07336 (KR)
(72) Inventor: CHA, Youngdo, Seoul 06772 (KR); KIM, Minsoo, Seoul 06772 (KR); PARK, Jungil, Seoul 06772 (KR); KIM, Samyoup, Seoul 06772 (KR); JO, Seong, Seoul 06772 (KR)
(74) Representative: Schott, Jakob Valentin
(86) International application number: PCT/KR2022/019821
(87) International publication number: WO 2024/122670

(57) **Abstract**

The present invention relates to an electronic device. The electronic device may comprise: a main frame to which light-transmissive display units are attached; temples connected to the main frame; PCBs embedded in the main frame or temples; and display panels embedded in the front frame from one side of the respective display units and electrically connected to the PCBs.

## Description

### [TECHNICAL FIELD]

The present disclosure relates to an electronic device. More particularly, the present disclosure relates to an electronic device used in virtual reality (VR), augmented reality (AR), mixed reality (MR), etc.

### [BACKGROUND ART]

Virtual reality (VR) refers to a specific environment or situation which is similar to reality created by artificial technology using a computer, etc., but is not reality or the technology itself.

Augmented reality (AR) refers to technology that combines a virtual object or information with a real environment to make it look like an object in an original environment.

Mixed reality (MR) or hybrid reality refers to technology that combines a virtual world and a real world to make a new environment or new information. In particular, an interaction between in objects which exist in reality and virtuality in real time is referred to as the mixed reality.

A created virtual environment or situation stimulates five senses of a user and makes spatial and temporal experiences similar to the reality, thereby making the user freely enter a boundary between the reality and imagination. The user is capable of interacting with objects implemented in such an environment, such as giving an operation or a command by using a device which actually exists in addition to immersion in such an environment.

In recent years, a research into a gear used in such a technical field has been actively conducted.

### [DETAILED DESCRIPTION OF INVENTION]

### [TECHNICAL PROBLEMS]

In view of the above, the present disclosure solves the above-described problems and other problems.

According to one embodiment of the present disclosure, the present disclosure may provide an electronic device used in virtual reality (VR), augmented reality (AR), mixed reality (MR), etc.

According to one embodiment of the present disclosure, the present disclosure may provide a structure of the electronic device used for the augmented reality (AR).

According to one embodiment of the present disclosure, the present disclosure may ensure structural rigidity of the electronic device used for the augmented reality (AR) and to maintain optical alignment.

According to one embodiment of the present disclosure, the present disclosure may provide a detachable structure of a replaceable vision correction lens of the electronic device used for the augmented reality (AR).

### [TECHNICAL SOLUTION]

According to an aspect of the present disclosure for achieving the object or another object, an electronic device may comprise: a main frame to which light-transmissive display units are coupled; temples connected to the main frame; PCBs embedded in the main frame or temples; and display panels embedded in the front frame from one side of the respective display units and electrically connected to the PCBs.

The display unit may include: a light-transmissive display lens inserted into an opening in which the main frame is formed; a display region formed in the display lens; and an upper frame fixed to the upper side of the display lens, and coupled to the main frame.

The display panel may face the display lens with respect to the upper frame, and provide image light to one surface of the display lens.

The display unit may image-reflect the image light in the display region.

### [EFFECT OF INVENTION]

Effects of the electronic device according to the present disclosure will be described below.

According to at least one of the embodiments of the present disclosure, an electronic device used in virtual reality (VR), augmented reality (AR), mixed reality (MR), etc., can be provided
According to at least one of the embodiments of the present disclosure, a structure of the electronic device used for the augmented reality (AR) can be provided.

According to at least one of the embodiments of the present disclosure, structural rigidity of the electronic device used for the augmented reality (AR) can be ensured and optical alignment can be maintained.

According to at least one of the embodiments of the present disclosure, a detachable structure of a replaceable vision correction lens of the electronic device used for the augmented reality (AR) can be provided.

An additional range of an applicability of the present disclosure will be apparent from the following detailed description. However, since various changes and modifications can be clearly appreciated by those skilled in the art within the spirit and the scope of the present disclosure, the detailed description and a specific embodiment such as a preferred embodiment of the present disclosure should be appreciated as being just given as an example.

### [BRIEF DESCRIPTION OF THE DRAWING]

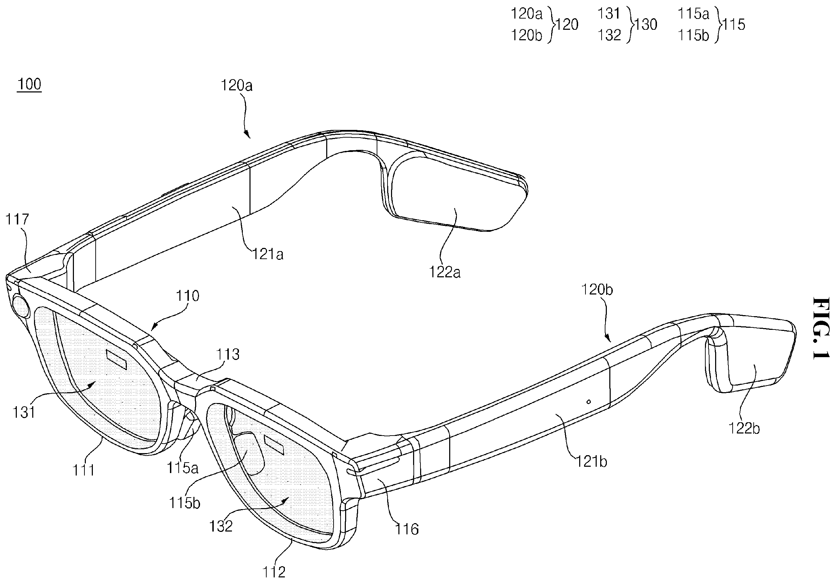

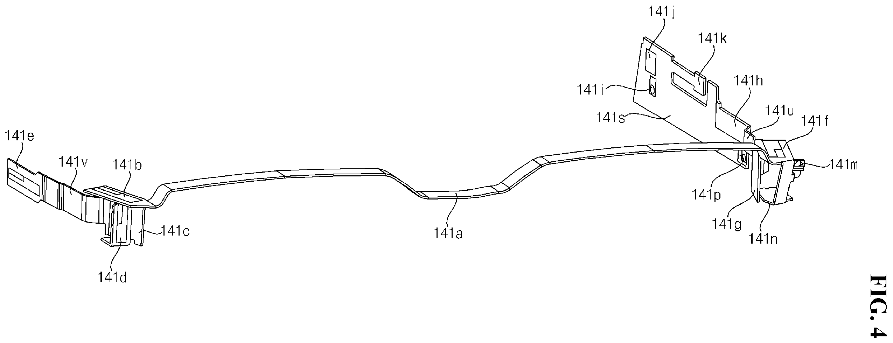

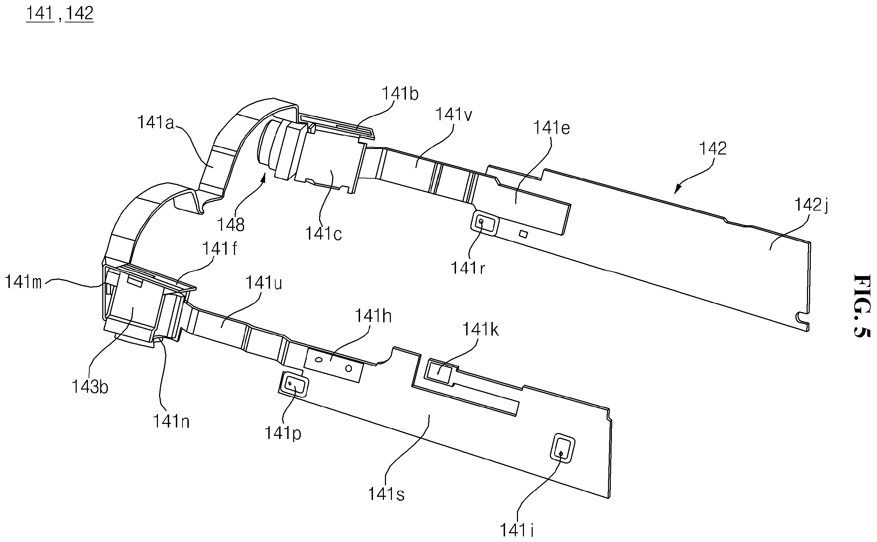

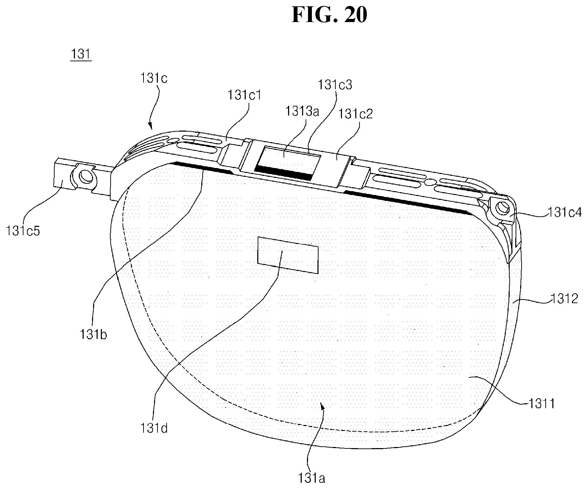

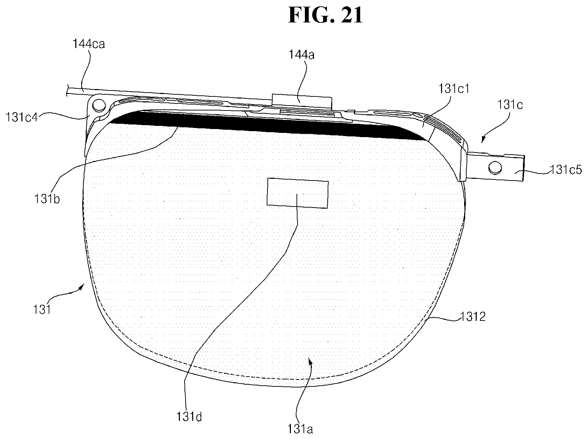

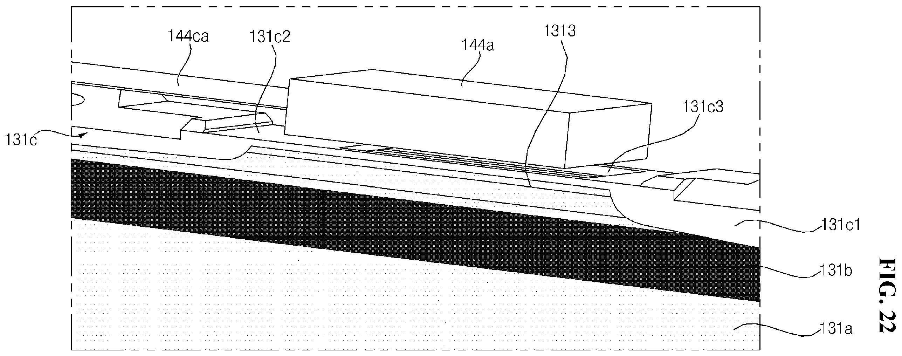

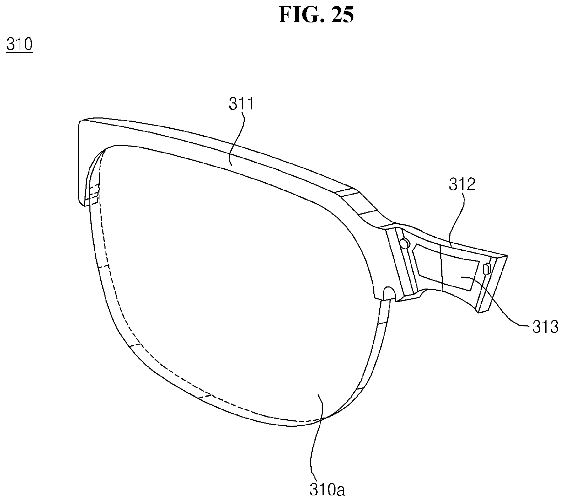

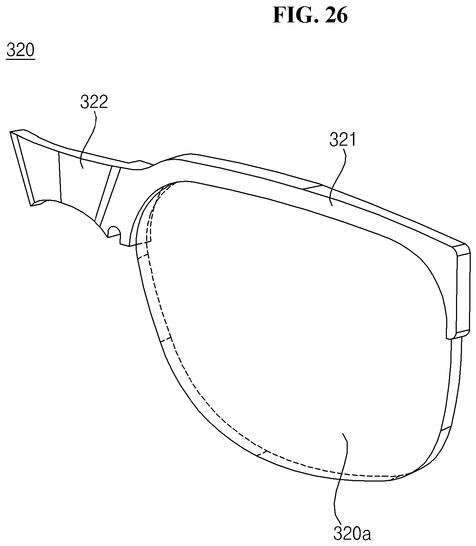

FIGS. 1 to 28 are diagrams illustrating examples of an electronic device according to embodiments of the present disclosure.

### [BEST MODE FOR CARRYING OUT THE INVENTION]

Hereinafter, embodiments disclosed in the present disclosure will be described in detail with reference to the accompanying drawings and the same or similar components are denoted by the same reference numerals regardless of a sign of the drawing, and duplicated description thereof will be omitted.

Suffixes "module" and "unit" for components used in the following description are given or mixed in consideration of easy preparation of the present disclosure only and do not have their own distinguished meanings or roles.

Further, in describing the embodiment of the present disclosure, a detailed description of related known technologies will be omitted if it is determined that the detailed description makes the gist of the embodiment disclosed in the present disclosure unclear. Further, it is to be understood that the accompanying drawings are just used for easily understanding the embodiments disclosed in the present disclosure and a technical spirit disclosed in the present disclosure is not limited by the accompanying drawings and all changes, equivalents, or substitutes included in the spirit and the technical scope of the present disclosure are included.

Terms including an ordinary number, such as first and second, are used for describing various constituent elements, but the constituent elements are not limited by the terms. The terms are used only to discriminate one constituent element from another constituent element.

It should be understood that, when it is described that a constituent element is "connected to" or "accesses" another constituent element, the constituent element may be directly connected to or access the other constituent element or a third constituent element may be present therebetween. In contrast, when it is described that a constituent element is "directly connected to" or "directly accesses" another constituent element, it is understood that no constituent element is present between the constituent element and another constituent element.

A singular form includes a plural form if there is no clearly opposite meaning in the context.

In the present disclosure, it should be understood that term "include" or "have"indicates that a feature, a number, a step, an operation, a component, a part or the combination thereof described in the specification is present, but does not exclude a possibility of presence or addition of one or more other features, numbers, steps, operations, components, parts or combinations thereof, in advance.

Referring to FIG. 1, the electronic device 100 may be generally in a shape of glasses or goggles. The electronic device 110 may include frames 110 and 120, and display units 130, 131, and 132.

The frames 110 and 120 may include a front frame 110, a side frame 120, and a nose support 115. The front frame 110 may include a plurality of rims 111 and 112, a bridge 113, and end pieces 116 and 117. The bridge 113 may connect a first rim 111 and a second rim 112. Shapes of openings of the rims 111 and 112 may correspond to a shape of the display unit 130. For example, the display unit 130 may be coupled to or fixed to the openings of the rims 111 and 112. The first end piece 117 may face the bridge 113 with respect to the first rim 111 and the second end piece 116 may face the bridge 113 with respect to the second rim 112. The front frame 110 may be left-right symmetric around the bridge 113.

The side frame 120 may be coupled to the front frame 110. The side frame 120 may be hinge-connected to the end pieces 116 and 117. For example, a first side frame 120a may be hinge-connected to the first end piece 117 and a second side frame 120b may be hinge-connected to the second end piece 116. The side frame 120 may include temples 121a and 121b and temple tips 122a and 122b. The temples 121a and 121b may be hinge-connected to the end pieces 116 and 117. The temple tips 122a and 122b may be opposite to the end pieces 116 and 117 with respect to the temples 121a and 121b.

The nose support 115 may be coupled to the bridge 113 or the rims 111 and 112. For example, a first nose support 115a may be coupled to a first rim 111 or the bridge 113 and a second nose support 115b may be coupled to a second rim 112 or the bridge 113. Depending on structures of the frames 110 and 120, the nose support 115 may be omitted or integrally formed with the front frame 110.

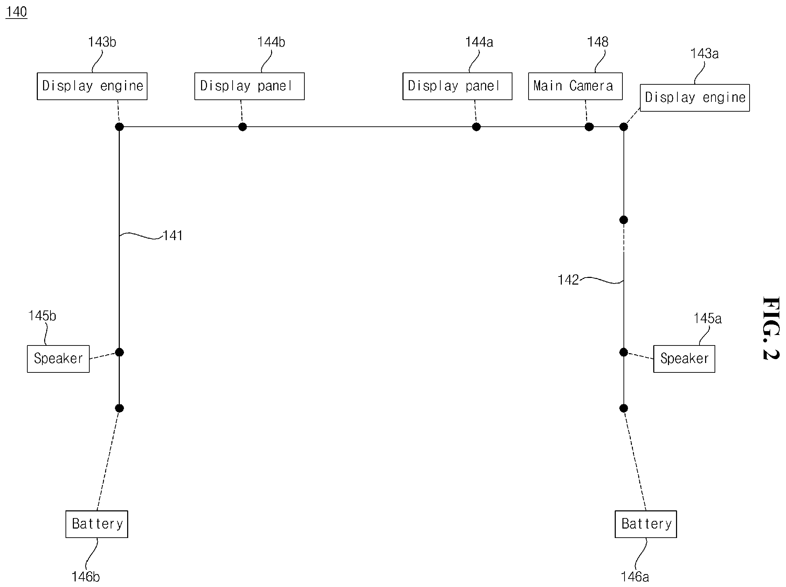

Referring to FIG. 2, the electronic device 100 (see FIG. 1) may include a main PCB 142 and a sub PCB 141. For example, the main PCB 142 and/or the sub PCB 141 may be a flexible printed circuit board (F-PCB). The sub PCB 141 may be elongated and may be embedded in the frames 110 and 120. For example, the sub PCB 141 may be embedded in the front frame 110, the second end piece 116, and/or the second side frame 120b. As another example, the sub PCB 141 may be embedded in the front frame 110, the first end piece 117, the second end piece 116, the first side frame 120a, and/or the second side frame 120b.

The main PCB 142 may be embedded in the frames 110 and 120, and electrically connected to the sub PCB 141. For example, the main PCB 142 may be embedded in the first side frame 120a and connected to the sub PCB 141.

A first battery 146a may be electrically connected to the main PCB 142 and may supply power to the main PCB 142. A second battery 146b may be electrically connected to the sub PCB 141 and may supply power to the sub PCB 141. A first speaker 145a may be electrically connected to the main PCB 142 and may receive a signal from the main PCB 142 and output a sound. A second speaker 145b may be electrically connected to the sub PCB 141, and may receive the signal from the sub PCB 141 and output the sound.

A first display engine 143a and a second display engine 143b may be electrically connected to the sub PCB 141. A first display panel 144a and/or a second display panel 144b may be electrically connected to the sub PCB 141. The first display engine 143a may provide an image signal, a video signal, or a text signal to the first display panel 144a, and the second display engine 143b may provide the image signal, the video signal, or the text signal to the second display panel 144b. For example, the display panels 144a and 144b may be a micro LED, an OLED, and an OLED on silicon (OLEDos). The display engine 143 and the display panel 144 may be referred to as imaging modules 143 and 144, imaging engines 143 and 144, image generators 143 and 144, or display modules 143 and 144.

Referring to FIG. 1 together, the first display engine 143a may be embedded in the first end piece 117 and the first display panel 144a may be embedded in the first rim 111. The second display engine 143b may be embedded in the second end piece 116 and the second display panel 144b may be embedded in the second rim 112. A main camera 148 may be electrically connected to the sub PCB 141, and embedded in the first end piece 117.

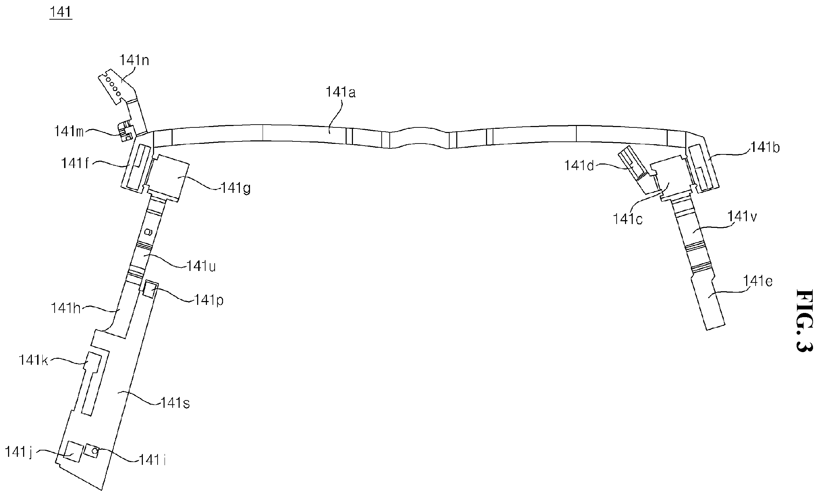

Referring to FIGS. 3 to 5 together with FIG. 2, the sub PCB 141 may include a main line 141a, a first display connector 141b, a camera module connector 141d, a first display board 141c, a main board connector 141e, a second display connector 141f, a second display board 141g, a sensor connector 141m, an electrode board 141n, a switching board 141h, a first microphone board 141i, a second power connector 141j, a second microphone board 141k, a third microphone board 141p, and/or a fourth microphone board 141r.

The main line 141a may be elongated and have a width smaller than widths of the rims 111 and 112 of the front frame 110 (see FIG. 1). The first display connector 141b may be formed on one end of the main line 141a. The first display panel 144a may be connected to the first display connector 141b. The first display board 141c may be bent and extended from the first display connector 141b. The first display engine 143a including electronic elements for image generation may be mounted on the first display board 141c. For example, an image processing processor, a T-CON board, or the like may be mounted on the second display board 141c.

The camera module connector 141d may be bent and extended from the first display board 141c. The main camera 148 may be connected to the camera module connector 141d. The main board connector 141e may be extended from the first display board 141c. The main board 142 may be connected to the main board connector 141e.

The second display connector 141f may be formed on the other end of the main line 141a. The second display panel 144b may be connected to the second display connector 141f. The second display board 141g may be bent and extended from the second display connector 141f. The second display engine 143b including electronic elements for image generation may be mounted on the second display board 141g. For example, the image processing processor, the T-CON board, or the like may be mounted on the second display board 141g.

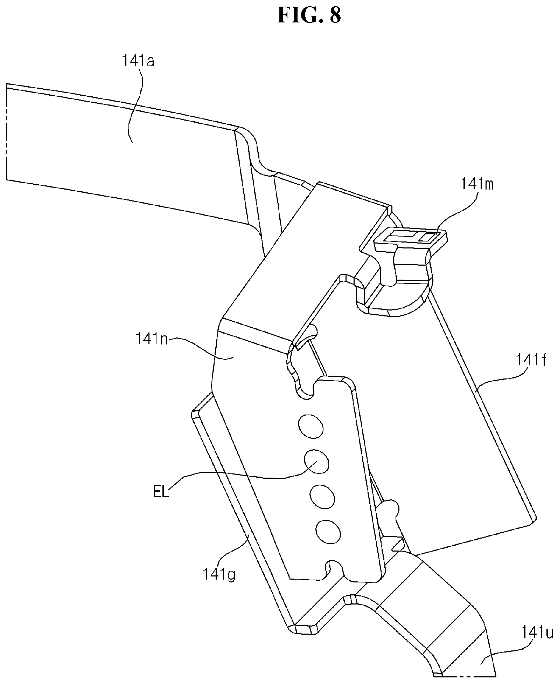

The electrode board 141n may be connected to the main line 141a or the second display connector 141f. The electrode board 141n may be in contact with a device provided externally and electrically connected with the external device. For example, the electrode board 141n may include a plurality of electrodes ELs (see FIG. 8).

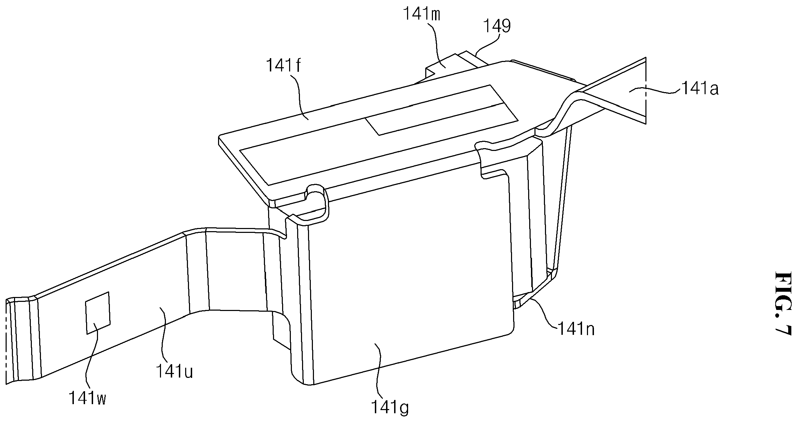

The sensor connector 141m may be connected to the main line 141a or the electrode board 141n. Sensors 149 (see FIG. 7) that sense an external environment may be connected to the sensor connector 141m. For example, the sensor 149 may be an illuminance sensor.

The flat board 141s may be connected to the second display board 141g. The second microphone board 141k may be extended on one side of the flat board 141s. The first microphone board 141i may be formed on the flat board 141s. The second power connector 141j may be formed on the flat board 141s. The flat board 141s may be connected to the second display board 141g by a second hinge FPCB 141u. The switching board 141h may be formed on the flat board 141s adjacent the second hinge FPCB 141u. The third microphone board 141p may be formed on the flat board 141s adjacent to the switching board 141h.

The main board connector 141e may be connected to the first display board 141c by a first hinge FPCB 141v. The fourth microphone board 141r may be formed on the main PCB 142 adjacent to the main board connector 141e. The first power connector 142j may be formed on the main PCB 142.

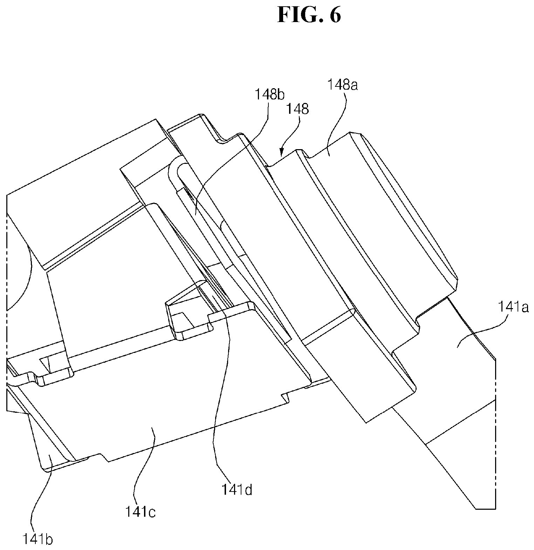

Referring to FIGS. 6 and 7, the main camera 148 may be coupled to the camera module connector 141d. The main camera 148 may include a camera module 148a and a connection electrode 148b. The camera module 148a may include an imaging element, and may convert light flowing from the outside into an electric signal. The connection electrode 148b may be connected to the camera module 148a. The connection electrode 148b may be electrically connected to the imaging element. The connection electrode 148b may be fixed to the camera module connector 141d. The connection electrode 148b may be electrically connected to the camera module connector 141d.

The sensor 149 may be mounted on the sensor connector 141m. The sensor 149 may be electrically connected with the sensor connector 141m. For example, the sensor 149 may be an illuminance sensor 149.

The second display engine 143b including electronic elements for image generation may be mounted on the second display board 141g. For example, the image processing processor, the T-CON board, or the like may be mounted on the second display board 141g.

The hall sensor 141w may be formed or mounted on the second hinge board 141u.

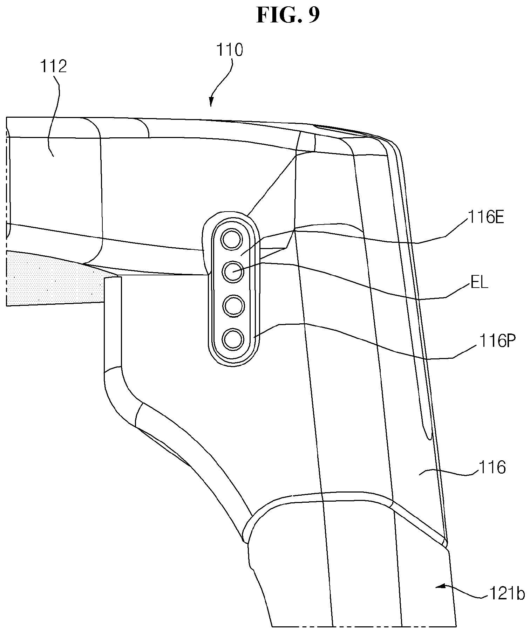

Referring to FIGS. 8 and 9, a plurality of electrodes EL may be fixed to the electrode board 141n. The plurality of electrodes EL may be arranged in line. The plurality of electrodes EL and the electrode board 141n may be located inside the second end piece 116. An electrode opening 116p may be formed in the second end piece 116. The electrode opening 116p may be elongated. An electrode cover 116E may have a shape corresponding to the electrode opening 116p and may be inserted into the electrode opening 116p. The electrode cover 116E may include a plurality of holes. Each of the plurality of holes may correspond to each of the plurality of electrodes EL. The electrodes EL may be exposed to the outside through the plurality of holes of the electrode cover 116E. The electrodes EL may be used for charging or the like of the electronic device 100.

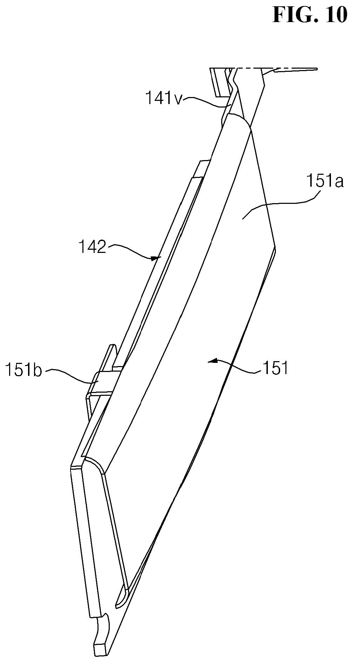

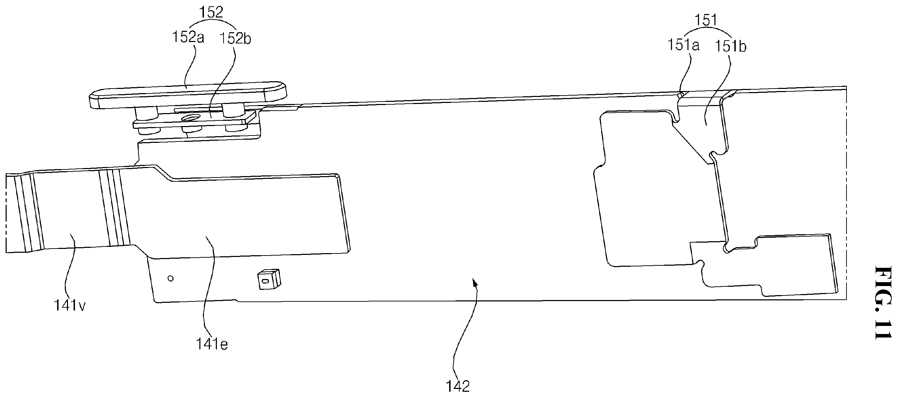

Referring to FIGS. 10 and 11, the touch pad 151 may be connected to the main PCB 142. The touch pad 151 may include a touch panel 151a and a panel electrode 151b. The touch panel 151a may be located on an outer surface of the main PCB 142 and may face the outer surface of the main PCB 142. For example, the touch panel 151a may be a capacitively sensitive panel. As another example, the touch panel 151a may be a capacitively sensitive panel. The panel electrode 151b may electrically connect the main PCB 142 and the touch panel 151a.

The camera switch 152 may be installed in the main PCB 142. The camera switch 152 is located on an upper side of the main PCB 142, and may be electrically connected to the main PCB 142. The camera switch 152 may adjust an operation of the main camera 148. The camera switch 152 may include a button 152a and a switching unit 152b. An electric signal may be generated while the button 152a is pressed and is in contact with the switching unit 152b. For example, the camera switch 152 may act as a shutter button of the camera.

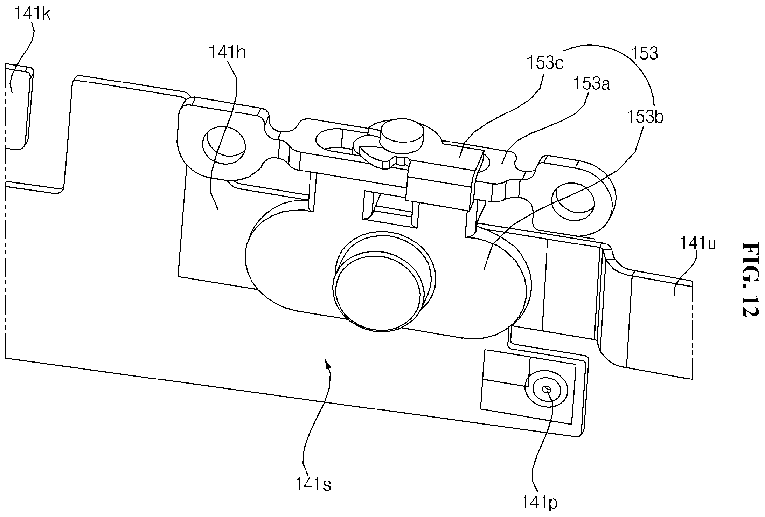

Referring to FIG. 12, the power switch 153 may include a base 153a, a switching button 153b, and a connector 153c. The base 153a may be located on an upper side of the flat board 141s. The switching button 153b may move while sliding on the base 153a. The connector 153c may connect the switching button 153b and the base 153a. The switching button 153b may be in electrical contact with the switching board 141h of the flat board 141s. An electrical signal generated by the switching button 153b and the switching board 141h of the flat board 151s may vary depending on a position of the switching button 153b. For example, the switching button 153b may move from the second microphone board 141k toward the second hinge FPCB 141u on the base 153a. When the switching button 153b moves from the base 153a and approaches the second hinge FPCB 141u as much as possible, the electronic device 100 may be turned on. The switching button 153b may be retracted to an original position at the base 153a. An elastic force may be provided to the switching button 153b for restoring the position of the switching button 153b.

For example, when the user pushes the switching button 153b in an intermediate position toward the second hinge FPCB 141u as much as possible to use the electronic device 100, the electronic device 100 may be activated, and the switching button 153b may be restored to the intermediate position. When the user does not use the electronic device 100 for a certain period of time, the electronic device 100 may enter a power saving mode. The user may push the switching button 153b toward the second hinge FPCB 141u to activate the electronic device 100 to use the electronic device 100 again. When the switching button 153b is pushed toward the second microphone board 141k, the electronic device 100 may be deactivated and enter an OFF mode.

As another example, when the user pushes the switching button 153b in the intermediate position toward the second hinge FPCB 141u as much as possible to use the electronic device 100, the electronic device 100 may be activated, and the switching button 153b may be restored to the intermediate position. The user may push the switching button 153b toward the second hinge FPCB 141u to activate a wireless connectivity, in order to connect the electronic device 100 and another device. For example, the wireless connection may be Bluetooth, Wi-Fi, NFC, etc. The power switch 153 may be referred to as a function switch 153.

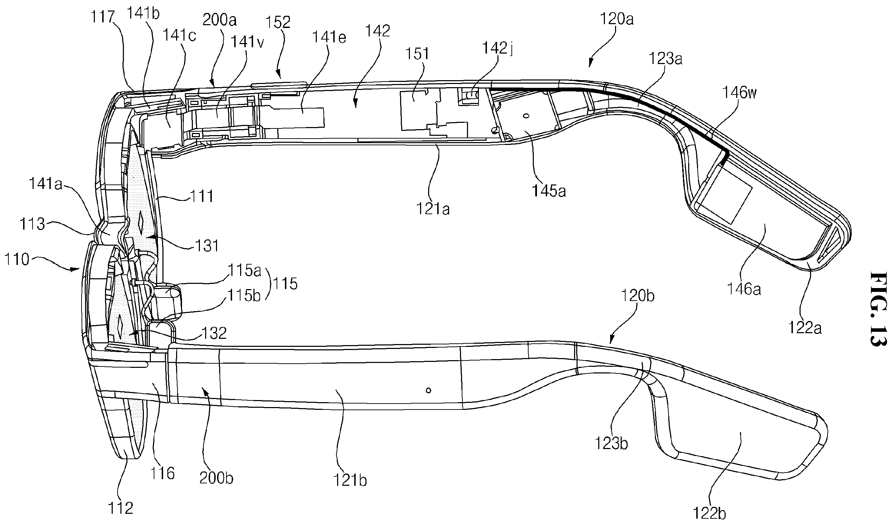

Referring to FIG. 13, the main line 141a may be located inside an upper side of the front frame 110. For example, the main line 141a may be embedded above the first rim 111, above the bridge 113, and/or above the second rim 112. The first display connector 141b, the first display board 141c, and/or the camera module connector 141d may be embedded in the first end piece 117. The main PCB 142 may be embedded in the temple 121a of the first side frame 120a. The first side frame 120a may be hinge-connected to the first end piece 117. The first hinge FPCB 141v connecting the first display board 141c and the main PCB 142 may be embedded in the first hinge 200a and/or the temple 121a of the first side frame 120a connecting the first end piece 117 and the first side frame 150a. The camera switch 152 may be exposed to the outside through the temple 121a of the first side frame 120a.

The first speaker 145a may be electrically connected to the main PCB 142 and embedded in the temple 121a of the first side frame 120a. The first battery 146a may be embedded in the temple tip 122a of the first side frame 120a. The first battery 146a may be electrically connected to the main PCB 142 by an electric wire 146w. The first battery 146a may supply power to the main PCB 142.

The side frames 120a and 120b may include ear portions 123a and 123b connecting the temples 121a and 121b and the temple tips 122a and 122b. The electric wire 146w may connect the first battery 146a and the first power connector 142j of the main PCB 142 inside the temple 121a, inside the ear portion 123a, and inside the temple tip 122a of the first side frame 120a.

A weight of the battery 146a may be relatively heavy by other electronic components. The battery 146a may be embedded in the temple tip 122a, and other electronic components may be embedded in the front frame 110 and the temple 121a. As a result, when the user wears the electronic device 100 on his/her face, the weight of the electronic device 100 is distributed around the user's ear, so that the electronic device 100 may be stably worn by the user.

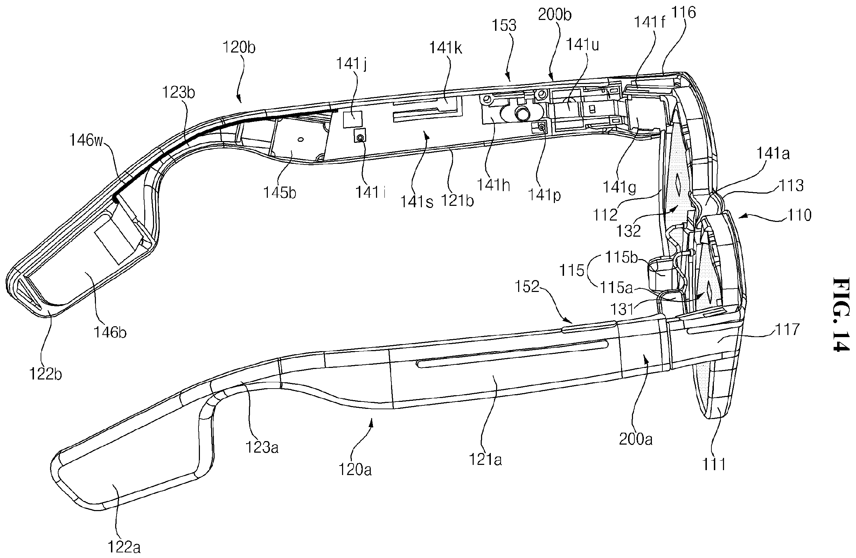

Referring to FIG. 14, the second display connector 141f and the second display board 141g may be embedded in the second end piece 116. The flat board 141s may be embedded in the temple tip 121b of the second side frame 120b. The second side frame 121b of the second side frame 120b may be hinge-connected to the second end piece 116 (200b). The second hinge 200b may hinge-connect the second side frame 120b to the second end piece 116.

The second hinge FPCB 141u connecting the second display board 141g and the flat board 141s may be embedded in the second hinge 200b and/or the temple 121b of the second side frame 120b. The power switch 153 may be embedded in the temple 121b of the second side frame 120b, and the switching button 153b (see FIG. 12) may be exposed to the outside by the temple 121b in the second side frame 120b.

The second speaker 145b may be embedded in the temple 121b of the second side frame 120b. The second battery 146b may be embedded in the temple tip 122b of the second side frame 120b. The electrical wire 146w may electrically connect the second battery 146b to the sub PCB 141 (see FIG. 3). For example, the electric wire 146w may be embedded in the second temple tip 122b, the ear portion 123b, and/or the second temple 121b, and electrically connect the second battery 146b to the second power connector 141j of the sub PCB 141.

The weight of the battery 146b may be relatively heavy by other electronic components. The battery 146b may be embedded in the temple tip 122b, and other electronic components may be embedded in the front frame 110 and the temple 121b. As a result, when the user wears the electronic device 100 on his/her face, the weight of the electronic device 100 is distributed around the user's ear, so that the electronic device 100 may be stably worn by the user.

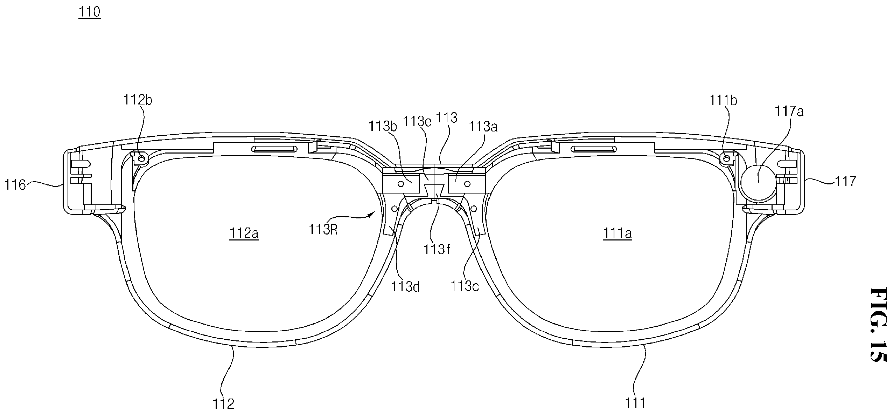

Referring to FIG. 15, the front frame 110 may include a first rim 111, a second rim 112, a bridge 113, a first end piece 117, and a second end piece 116. The first rim 111 may include a first opening 111a, and the second rim 112 may include a second opening 112a.

The bridge 113 may connect the first rim 111 and the second rim 112. The first opening 111a may face the second opening 112a with respect to the bridge 113. The first end piece 117 may face the bridge 113 with respect to the first opening 111a. The second end piece 116 may face the bridge 113 with respect to the second opening 112a. The end pieces 116 and 117 and the bridge 113 may be aligned at the same horizontal level.

The first end piece 117 may include a camera hole 117a. The camera hole 117a may penetrate the first end piece 117. A lens of the camera module 148a of the main camera 148 (see FIG. 6) may be exposed to the outside through the camera hole 117a.

A rigid piece 113R may be coupled to the bridge 113. The bridge 113 may be made of a synthetic resin, and the rigid piece 113R may include a metal. For example, the rigid piece 113R may be formed by metal injection molding inside the bridge 113. The rigid piece 113R may include lens frame coupling portions 113a and 113b, nose support coupling portions 113c and 113d, and a coupling groove 113e. The first lens frame coupling portion 113a may be adjacent to the first rim 111, and the second lens frame coupling portion 113b may be adjacent to the second rim 112. The coupling groove 113e may be located between the first lens frame coupling portion 113a and the second lens frame coupling portion 113b. The first nose support coupling portion 113c may be located below the first lens frame coupling portion 113a and may be adjacent to the first rim 111. The second nose support coupling portion 113d may be located below the second lens frame coupling portion 113b and may be adjacent to the second rim 112. The coupling protrusion 113f of the bridge 113 may be inserted into the coupling groove 113e of the rigid piece 113R. The first lens frame coupling portion 113a and the second lens frame coupling portion 113b may be recessed to form a step.

The third lens frame coupling portion 111b may face the first lens frame coupling portion 113a of the rigid piece 113R with respect to the first opening 111a, and may be formed in the front frame 110 between the first end piece 117 and the first opening 111a. The third lens frame coupling portion 111b may include the metal. For example, the third lens frame coupling portion 111b may be formed by the metal injection molding inside the front frame 110.

The fourth lens frame coupling portion 112b may face the second lens frame coupling portion 113b of the rigid piece 113R with respect to the second opening 112a, and may be formed in the front frame 110 between the second end piece 116 and the second opening 112a. The fourth lens frame coupling portion 112b may include the metal. For example, the fourth lens frame coupling portion 112b may be formed by the metal injection molding inside the front frame 110.

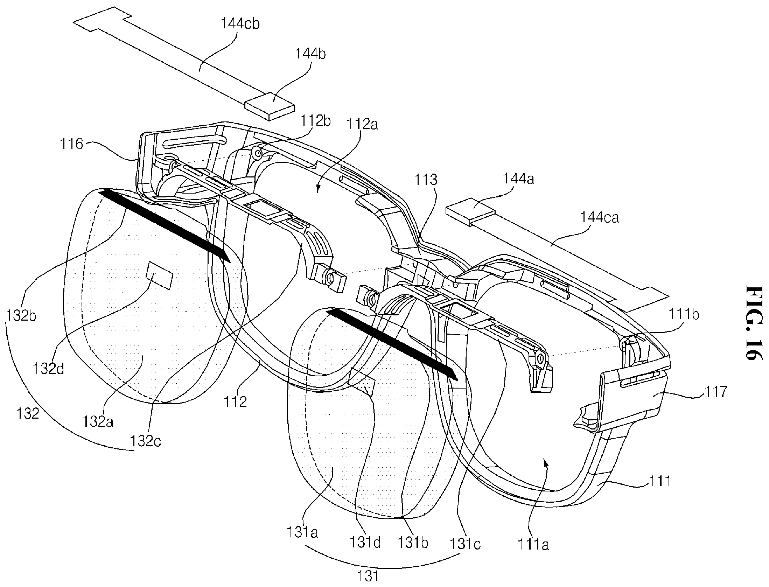

Referring to FIG. 16, the first display unit 131 may include a first upper frame 131c and a first display lens 131a. The first display lens 131a may be inserted into and fixed to the first opening 111a in a shape corresponding to the first opening 111a of the first rim 111. The first upper frame 131c may cover an upper surface of the first display lens 131a, and may be fixed to the first display lens 131a. The first upper frame 131c may be coupled to the first rim 111.

The second display unit 132 may include a second upper frame 132c and a second display lens 132a. The second display lens 132a may be inserted into and fixed to the second opening 112a in a shape corresponding to the second opening 112a of the second rim 112. The second upper frame 132c may cover an upper surface of the second display lens 132a, and may be fixed to the second display lens 132a. The second upper frame 132c may be coupled to the second rim 112.

The first dark shield 131b may be formed inside the first display lens 131a, and may be adjacent to an upper side of the first display lens 131a. The first dark shield 131b may be formed in line with the first upper frame 131c in the first display lens 131a. The second dark shield 132b may be formed inside the second display lens 132a, and may be adjacent to an upper side of the second display lens 132a. The second dark shield 132b may be formed in line with the second upper frame 132c in the second display lens 132a.

The first display panel 144a may be mounted on the first upper frame 131c and provide image light to the first display lens 131a. A first display panel cable 144ca may be connected to the first display panel 144a.

The second display panel 144b may be mounted on the second upper frame 132c and may provide the image light to the second display lens 132a. A second display panel cable 144cb may be connected to the second display panel 144b.

Hereinafter, the description of the first display unit 131 may be equally applied to the second display unit 132.

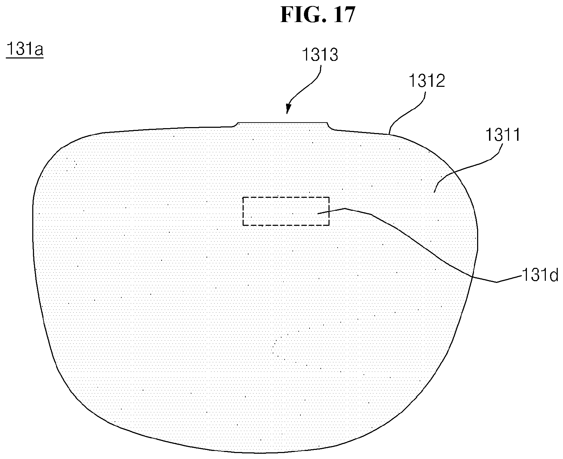

Referring to FIG. 17 together with FIG. 16, the first display lens 131a may include a perspective surface 1311, a display region 131d, a side surface 1312, and an incident surface 1313. The perspective surface 1311 may allow light to pass therethrough. The perspective surface 1311 may be defined by the side surface 1312. The side surface 1312 may form an outer periphery of the first display lens 131a. The display region 131d may be located inside the first display lens 131a. For example, the display region 131d may be formed inside the perspective surface 1311.

The incident surface 1313 may be formed on the side surface 1312. The incident surface 1313 may protrude from the side surface 1312, and may form a portion of the upper surface 1312 of the first display lens 131a. An image incident on the incident surface 1313 may be directed to the user's eye through the display region 131d.

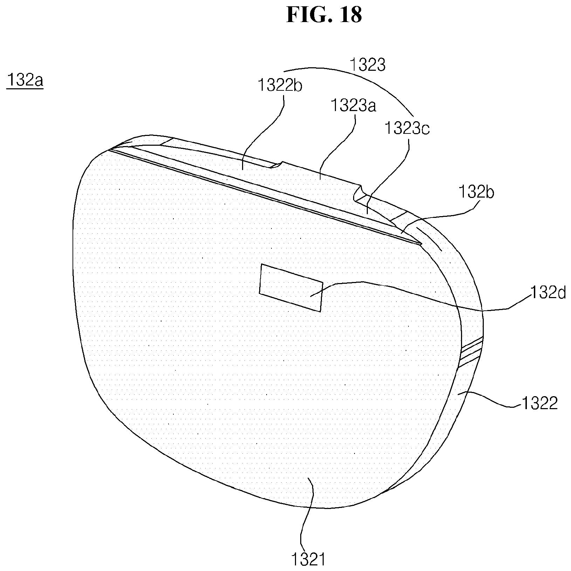

Referring to FIG. 18 together with FIG. 16, the second display lens 132a may include a perspective surface 132a, a side surface 1322, an incident surface 1323, and a display region 132d. The perspective surface 1321 may allow light to pass therethrough. The perspective surface 1321 may be defined by the side surface 1322. The side surface 1322 may form an outer periphery of the second display lens 132a. The display region 132d may be located inside the second display lens 132a. For example, the display region 132d may be formed inside the perspective surface 1321.

The incident surface 1323 may be formed on the side surface 1322. The incident surface 1323 may protrude from the side surface 1322, and may form a portion of the upper surface 1322 of the second display lens 132a. An image incident on the incident surface 1323 may be directed to the user's eye through the display region 132d.

The incident surface 1323 may include a first incident surface 1323a, a second incident surface 1323b, and a third incident surface 1323c. The first incident surface 1323a may be formed to protrude from the side surface 1322, and may be a plane having an inclination. The first incident surface 1323a may form a slope that rises from a rear of the lens 132a toward a front. The first incident surface 1323a may be referred to as a display panel seating surface 1323a. The second incident surface 1323b may be connected to the first incident surface 1323a, and an edge of the upper surface 1322 of the second display lens 132a may be formed to be tapered. For example, the second incident surface 1323b may have the same inclination as the first incident surface 1323a. The third incident surface 1323c may be connected to the first incident surface 1323a, and an edge of the upper surface 1322 of the second display lens 132a may be formed to be tapered. For example, the third incident surface 1323c may have the same inclination as the first incident surface 1323a and/or the second incident surface 1323b. The first incident surface 1323a may be aligned with the display region 132d, and the second incident surface 1323b may face the third incident surface 1323c with respect to the first incident surface 1323a.

The incident surface 1323 may be in line with the second dark shield 132b and aligned with the second dark shield 132b. A length of the incident surface 1323 may be smaller than a length of the second dark shield 132b.

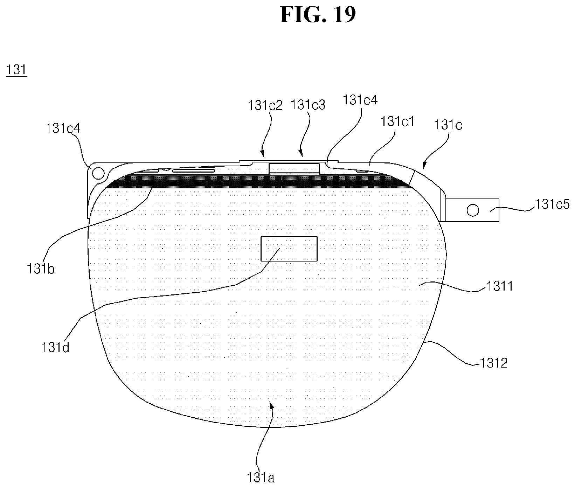

Referring to FIGS. 19 to 22, the first upper frame 131c may be mounted on the first display lens 131a. The first upper frame 131c may be fixed to the first display lens 131a and may cover the upper surface of the first display lens 131a. The first upper frame 131c may include a frame line 131c1, a window frame 131c2, a window 131c3, and fastening parts 131c4 and 131c5. For example, the lenses 131a and 132a may be bonded to the upper frames 131c and 132c.

The frame line 131c1 may be in contact with and cover the upper surface of the first display lens 131a. The frame line 131c1 may be fixed to the first display lens 131a. The window frame 131c2 may be formed in the frame line 131c1, and may form a step that is recessed and lowered from the frame line 131c1. The window 131c3 may be formed by opening a portion of the window frame 131c2. For example, the window 131c3 may be rectangular. A size of the window 131c3 may correspond to a size of the first display panel 144a. For example, the size of the window 131c3 may be the same as the size of the first display panel 144a. The fastening parts 131c4 and 131c5 may be formed at both distal ends of the frame line 131c1.

A lower surface of the frame line 131c1 may be recessed to form an alignment groove 131c4. The alignment groove 131c4 may face the window frame 131c2 or may be aligned with the window 131c3.

The first incident surface 1313a of the first display lens 131a may be inserted into the alignment groove 131c4 of the first upper frame 131c or aligned with the window 131c3. The first display panel 144a may be placed in the window 131c3 of the first upper frame 131c. The first display panel 144a may face or contact the first incident surface 1313a of the first display lens 131a. An image provided by the first display panel 131a may be provided to the first display lens 131a through the first incident surface 1313a of the first display lens 131a, and image-reflected to the display region 131d. The first display panel cable 144ca may be connected to the first display panel 144a, and elongated in a longitudinal direction of the first upper frame 131c.

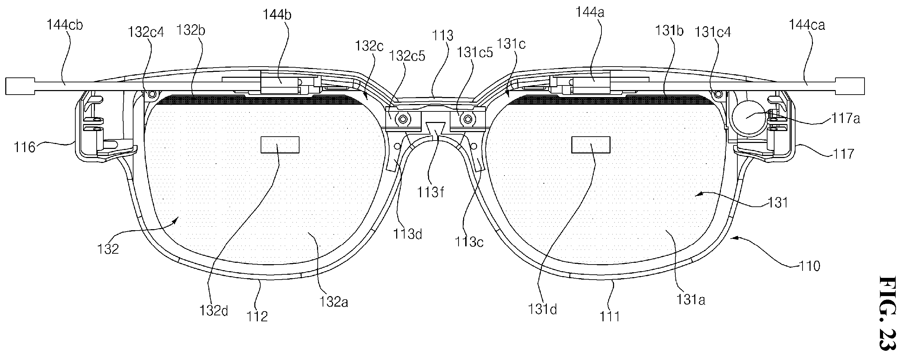

Referring to FIG. 23 together with FIG. 15, the first display unit 131 may be coupled to the first rim 111 of the front frame 110, and the second display unit 132 may be coupled to the second rim 112 of the front frame 110. The first display lens 131a may be inserted into and fixed to the first opening 111a, and the second display lens 132a may be inserted into and fixed to the second opening 112a. The fastening part 131c5 of the first upper frame 131c may be fixed to the first lens frame coupling portion 113a, and the fastening part 131c4 of the first upper frame 131c may be fixed to the third lens frame coupling portion 111b. The fastening part 132c5 of the second upper frame may be fixed to the second lens frame coupling portion 113b, and the fastening part 132c4 of the second upper frame may be fixed to the fourth lens frame coupling portion 112b.

The first display panel cable 144ca may be connected to the first display connector 141b (see FIG. 3), and the second display panel cable 144cb may be connected to the second display connector 141f.

As a result, the display units 131 and 132 may be firmly fixed to the front frame 110, and images output from the display panels 144a and 144b may be image-reflected to the display regions 131d and 132d of the display lenses 131a and 132a. In addition, even in a case where deformation occurs in the front frame 110, optical alignment maybe prevented from being distorted due to strong coupling between the rigid piece 113R and the display units 130.

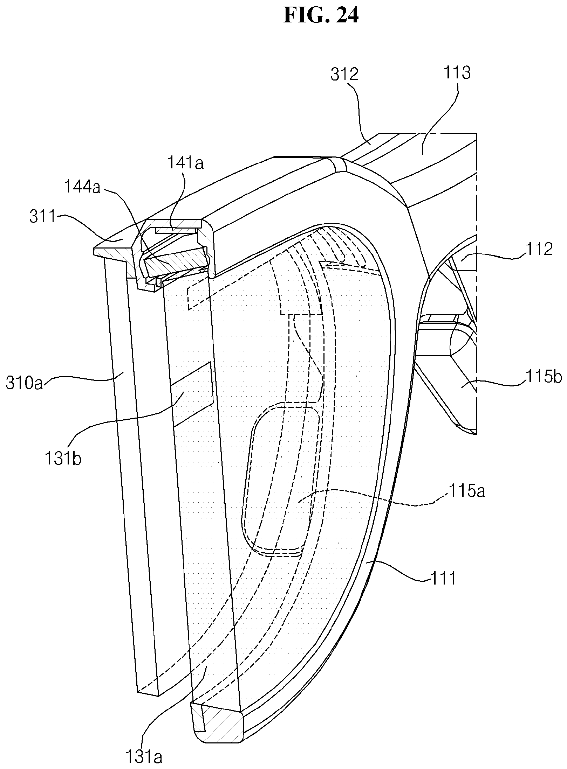

Referring to FIGS. 24 to 28, a subframe 300 may include a first subframe 310 and a second subframe 320. The first subframe 310 may be coupled to the second subframe 320 or separated from the second subframe 320. The first subframe 310 and the second subframe 320 may be coupled to form the subframe 300.

The first sub-frame 310 may include a first sub-upper frame 311 and a first sub-bridge 312. A first corrective lens 310a may be coupled to and fixed to the first sub-upper frame 311. The first corrective lens 310a may have a prescription. For example, the first corrective lens 310a may be a lens capable of correcting myopia, astigmatism, and/or hyperopia. The first sub-bridge 312 may be extended from the first sub-upper frame 311. A first magnet 313 may be coupled or fixed to the first sub-bridge 312. For example, the first magnet 313 may have an N pole.

The second subframe 320 may include a second sub-upper frame 321 and a second sub-bridge 322. A second corrective lens 320a may be coupled to and fixed to the second sub-upper frame 321. The second corrective lens 320a may have the prescription. For example, the second corrective lens 320a may be the lens capable of correcting the myopia, the astigmatism, and/or the hyperopia. The second sub-bridge 322 may be extended from the second sub-upper frame 321. A second magnet 323 may be coupled or fixed to the second sub-bridge 322. For example, the second magnet 323 may have an S pole.

As a result, the first subframe 310 and the second subframe 320 may be coupled by a magnetic body. In addition, the first corrective lens 310a and/or the second corrective lens 320a may be replaced according to an eyesight of the user.

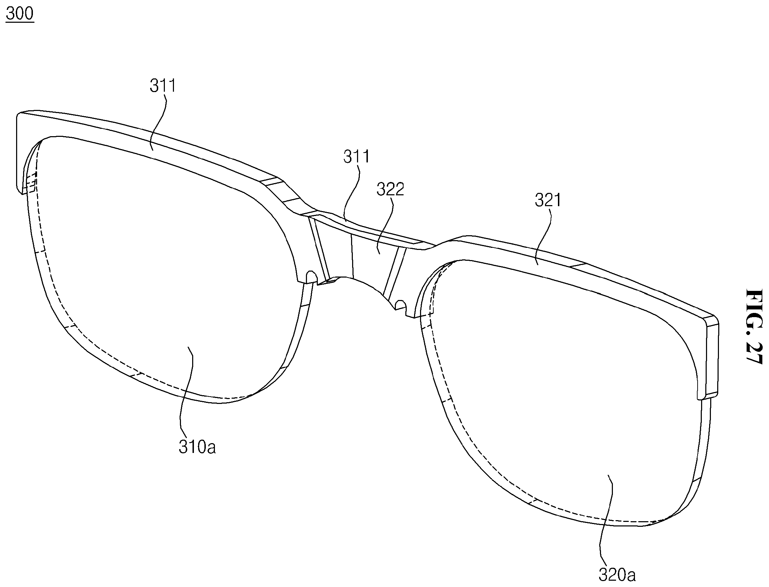

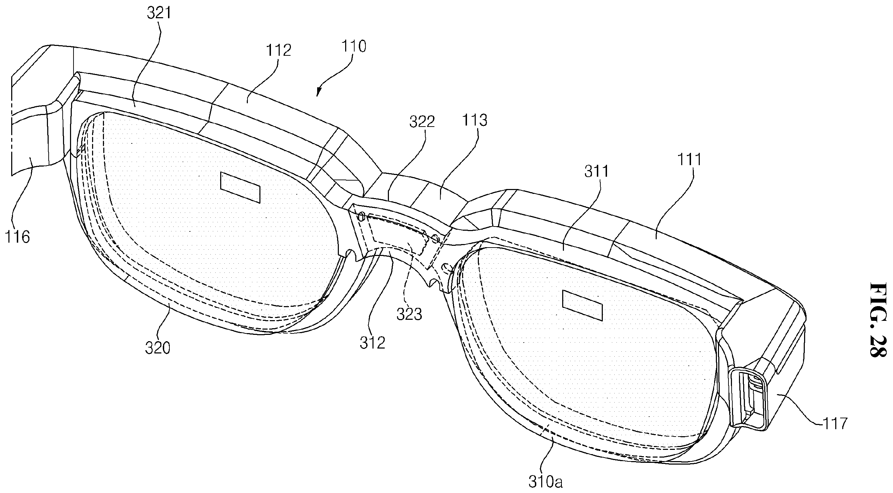

Referring to FIG. 28 together with FIG. 15, the corrective lenses 310a and 320a may be coupled or fixed to the front frame 110 by the subframe 300 (see FIG. 27). The rigid piece 113R (see FIG. 27) embedded in the bridge 113 of the front frame 110 may include the metal, and the magnets 313 and 323 of the subframe 300 may be coupled to the front frame 110 by the rigid piece 113R of the front frame 110.

Referring to FIGS. 1 to 28, an electronic device may include: a main frame to which light-transmissive display units are coupled; temples connected to the main frame; PCBs embedded in the main frame or temples; and display panels embedded in a front frame from one side of the display units and electrically connected to the PCBs, the display unit may include: a light-transmissive display lens inserted into an opening formed by the main frame; a display region formed in the display lens; and an upper frame fixed to an upper side of the display lens and coupled to the main frame, the display panel may face the display lens with respect to the upper frame, and provide image light to one surface of the display lens, and the display unit may image-reflect the image light in the display region.

The upper frame may include: a frame line covering the upper side of the display lens; and a window formed by opening a portion of the frame line, and the display panel may face one surface of the display lens through the window of the upper frame.

The upper frame may include: an alignment groove formed by recessing one surface of the frame line aligned with the window or adjacent to the window and facing the display lens, the display lens may include: a perspective surface through which light passes and in which the display region is located; a side surface forming an outer periphery and defining the perspective surface; and an incident surface formed on the side surface and aligned with the display region, and at least a portion of the incident surface of the display lens may protrude from the side surface, and may be inserted into the alignment groove of the upper frame.

The display panel may face the incident surface of the display lens through the window of the upper frame.

The upper frame may include: a first fastening part formed on one end of the frame line; and a second fastening part facing the first fastening part with respect to the window, and formed on the other end of the frame line, and the first fastening part and the second fastening part may be fixed to the main frame.

The main frame further include: a bridge facing the upper frame with respect to the temple, and formed in the main frame; and a rigid piece fixed to the bridge, and any one of the first fastening part and the second fastening part may be fixed to the rigid piece.

The display lens may further include a dark shield location between the incident surface and the display region.

The main frame may include: a first rim in which a first opening is formed; a second rim in which a second opening is formed; a bridge connecting the first rim and the second rim; and a rigid piece fixed to the bridge, the display unit may include: a first display unit clogging the first opening and coupled to the first rim; and a second display unit clogging the second opening and coupled to the second rim; each of the first display unit and the second display unit may include: a light-transmissive display lens; a display region formed in the display lens; and an upper frame fixed to the upper side of the display lens, and the upper frame of the first display unit and the upper frame of the second display unit may be fixed to the rigid piece.

The main frame may include a synthetic resin, and the rigid piece may include a metal, and is integrally formed with the main frame.

The electronic device may include: a corrective lens facing the display unit; a subframe fixed to the corrective lens; and a magnet fixed to the subframe, and the subframe is coupled to the rigid piece.

The corrective lens may include: a first corrective lens; and a second corrective lens adjacent to the first corrective lens, the subframe may include: a first subframe to which the first corrective lens is fixed; and a second subframe to which the second corrective lens is fixed, the magnet may include: a first magnet fixed to the first subframe; and a second magnet fixed to the second subframe, and the first magnet may have a different polarity from the second magnet.

The display lens may further include a dark shield location between the incident surface and the display region.

Certain embodiments or other embodiments of the present disclosure described above are not mutually exclusive or distinct from each other. Any or all elements of the embodiments of the present disclosure described above may be combined or combined with each other in configuration or function.

For example, it is meant that a configuration "A" described in a specific embodiment and/or the drawings and a configuration "B" described in another embodiment and the drawings may be combined with each other. In other words, although the combination between the configurations is not directly described, the combination is possible except in the case where it is described that the combination is impossible.

The aforementioned detailed description should not be construed as restrictive in all terms and should be exemplarily considered. The scope of the present disclosure should be determined by rational construing of the appended claims and all modifications within an equivalent scope of the present disclosure are included in the scope of the present disclosure.

## Claims

1. An electronic device comprising:
a main frame to which light-transmissive display units are coupled;
temples connected to the main frame;
PCBs embedded in the main frame or temples; and
display panels embedded in a front frame from one side of the display units and electrically connected to the PCBs,
wherein the display unit includes
a light-transmissive display lens inserted into an opening formed by the main frame;
a display region formed in the display lens; and
an upper frame fixed to an upper side of the display lens and coupled to the main frame,
wherein the display panel faces the display lens with respect to the upper frame, and provides image light to one surface of the display lens, and
wherein the display unit image-reflects the image light in the display region.

2. The electronic device of claim 1, wherein the upper frame includes:
a frame line covering the upper side of the display lens; and
a window formed by opening a portion of the frame line, and
wherein the display panel faces one surface of the display lens through the window of the upper frame.

3. The electronic device of claim 2, wherein the upper frame includes:
an alignment groove formed by recessing one surface of the frame line aligned with the window or adjacent to the window and facing the display lens,
wherein the display lens includes:
a perspective surface through which light passes and in which the display region is located;
a side surface forming an outer periphery and defining the perspective surface; and
an incident surface formed on the side surface and aligned with the display region, and
wherein at least a portion of the incident surface of the display lens protrudes from the side surface, and is inserted into the alignment groove of the upper frame.

4. The electronic device of claim 3, wherein the display panel faces the incident surface of the display lens through the window of the upper frame.

5. The electronic device of claim 2, wherein the upper frame includes:
a first fastening part formed on one end of the frame line; and
a second fastening part facing the first fastening part with respect to the window, and formed on the other end of the frame line, and
wherein the first fastening part and the second fastening part are fixed to the main frame.

6. The electronic device of claim 5, wherein the main frame further includes:
a bridge facing the upper frame with respect to the temple, and formed in the main frame; and
a rigid piece fixed to the bridge, and
wherein any one of the first fastening part and the second fastening part is fixed to the rigid piece.

7. The electronic device of claim 3, wherein the display lens further includes
a dark shield location between the incident surface and the display region.

8. The electronic device of claim 1, wherein the main frame includes:
a first rim in which a first opening is formed;
a second rim in which a second opening is formed;
a bridge connecting the first rim and the second rim; and
a rigid piece fixed to the bridge,
wherein the display unit includes:
a first display unit clogging the first opening and coupled to the first rim; and
a second display unit clogging the second opening and coupled to the second rim;
wherein each of the first display unit and the second display unit includes:
a light-transmissive display lens;
a display region formed in the display lens; and
an upper frame fixed to the upper side of the display lens, and
wherein the upper frame of the first display unit and the upper frame of the second display unit are fixed to the rigid piece.

9. The electronic device of claim 8, wherein the main frame includes a synthetic resin, and
wherein the rigid piece includes a metal, and is integrally formed with the main frame.

10. The electronic device of claim 1, comprising:
a corrective lens facing the display unit;
a subframe fixed to the corrective lens; and
a magnet fixed to the subframe,
wherein the subframe is coupled to the rigid piece.

11. The electronic device of claim 10, wherein the corrective lens includes:
a first corrective lens; and
a second corrective lens adjacent to the first corrective lens,
wherein the subframe includes:
a first subframe to which the first corrective lens is fixed; and
a second subframe to which the second corrective lens is fixed,
wherein the magnet includes:
a first magnet fixed to the first subframe; and
a second magnet fixed to the second subframe, and
wherein the first magnet has a different polarity from the second magnet.

12. The electronic device of claim 11, wherein at least one of the first magnet or the second magnet is coupled to the rigid piece.
